# EUROPEAN PATENT APPLICATION

(11) **EP 4 755 732 A1**
(43) Date of publication of application: **10.06.2026**
(21) Application number: 25211969.8
(22) Date of filing: 29.10.2025
(51) Int. Cl.: B60S 1/38, B60S 1/40

(54) **UNIVERSAL WIPER MOUNTING BASE ASSEMBLY STRUCTURE**

(30) Priority: 06.12.2024 CN 202423022161 U
(71) Applicant: Danyang UPC Auto Parts Co., Ltd., 212300 Danyang, Zhenjiang, Jiangsu (CN)
(72) Inventor: CHANG, Che-Wei, 22069 New Taipei City (TW); YANG, Cheng-Kai, 22069 New Taipei City (TW); CHANG, Chuan-Chih, 22069 New Taipei City (TW)
(74) Representative: 2K Patent Partnerschaft mbB

(57) **Abstract**

This disclosure is a universal wiper mounting base assembly structure (1), including a pivot frame (10), a mounting seat (20), an adapter seat (30), and a driving arm fitting (40). The pivot frame (10) includes a pivot seat (11) and a pair of extension arms (12). The pivot seat (11) has a pivot shaft (111) and a plurality of latch grooves (112). The mounting seat (20) has an accommodation space (200) and a plurality of latch hooks (21). The mounting seat (20) is coupled to the pivot seat (11) through the mutual engagement of the latch hooks (21) with the latch grooves (112). The adapter seat (30) includes a base (31) and a carrier (32) disposed on the base (31). A pivot hole (311) is defined in the base (31). A first coupling portion (321) is disposed on the carrier (32). The base (31) is coupled to the pivot seat (11) through the pivot shaft (111) pivotally received in the pivot hole (311), and the base (31) is positioned within the accommodation space (200). A driving arm fitting (40) includes a second coupling portion (41) and a plurality of positioning portions (42) for connecting the driving arm (2). The driving arm fitting (40) is coupled to the carrier (32) through mutual engagement of the second coupling portion (41) with the first coupling portion (321). Thus, the universal wiper mounting base assembly structure is provided.

## Description

### BACKGROUND OF THE DISCLOSURE

### Technical Field

The technical field relates to a windshield wiper, and more particularly to a universal wiper mounting base assembly structure.

### Description of Related Art

A windshield wiper is mounted on the outer surface of a vehicle's windshield and connected to a driving arm of the vehicle so that the wiper is driven by the driving arm to repeatedly swing across the windshield to wipe away rainwater, stains, or other matter.

Furthermore, a windshield wiper mainly couples a driving arm to an adapter, and metal springs and a wiper strip are attached to the bottom side of the adapter. Accordingly, the driving arm drives the adapter and presses the metal springs and the wiper strip to clean the vehicle's windshield. Additionally, a mounting seat is disposed between the aforementioned adapter and the wiper strip, and the wiper strip and the metal springs are assembled therein to complete the windshield wiper assembly. However, the use of the windshield wiper requires installing different mounting seats for different vehicle models, and the assembly process is cumbersome and complicated, resulting in inconvenience in use. Therefore, there is a need for improvement.

In view of the above drawbacks, the inventor proposes this disclosure based on his expert knowledge and elaborate researches in order to solve the problems of related art.

### SUMMARY OF THE DISCLOSURE

One objective of this disclosure is to provide a universal wiper mounting base assembly structure that simplifies the assembly of the windshield wiper and enhances its convenience of use.

In order to achieve the above objective, this disclosure is a universal wiper mounting base assembly structure, including a pivot frame, a mounting seat, an adapter seat, and a driving arm fitting. The pivot frame includes a pivot seat and a pair of extension arms. The pivot seat has a pivot shaft and a plurality of latch grooves. The mounting seat has an accommodation space and a plurality of latch hooks. The mounting seat is coupled to the pivot seat through the mutual engagement of the latch hooks with the latch grooves. The adapter seat includes a base and a carrier disposed on the base. A pivot hole is defined in the base. A first coupling portion is disposed on the carrier. The base is coupled to the pivot seat through the pivot shaft pivotally received in the pivot hole, and the base is positioned within the accommodation space. A driving arm fitting includes a second coupling portion and a plurality of positioning portions for connecting the driving arm. The driving arm fitting is coupled to the carrier through mutual engagement of the second coupling portion with the first coupling portion.

In one embodiment of this disclosure, the universal wiper mounting base assembly structure further includes a pair of shrouds coupled to two sides of the mounting seat. Each of the shrouds includes a pair of engaging blocks and a protrusion disposed between the engaging blocks. The mounting seat has a pair of hooks and a hook hole on two sides thereof, and each of the shrouds is coupled to one side of the mounting seat through engagement of the pair of engaging blocks with the pair of hooks and engagement of the protrusion with the hook hole.

In one embodiment of this disclosure, each of the shrouds has a pair of flanges disposed at an end facing the mounting seat, and each of the engaging blocks is located between an inner wall surface of the shroud and each of the flanges.

In one embodiment of this disclosure, the universal wiper mounting base assembly structure further includes a wiper strip assembly coupled to the bottom side of the pivot frame.

In one embodiment of this disclosure, the pivot seat includes two supporting plates spacedly arranged between the pair of extension arms, and the pivot shaft extends across the two supporting plates.

In one embodiment of this disclosure, the latch hooks are symmetrically disposed on opposite sides of the accommodation space.

In one embodiment of this disclosure, the first coupling portion is a shaft, and the second coupling portion is an axial hole.

In one embodiment of this disclosure, the pivot hole is located at the same longitudinal position relative to the first coupling portion.

In one embodiment of this disclosure, each positioning portion of the driving arm fitting is a slot.

Compared with the related art, the universal wiper mounting base assembly structure of this disclosure includes a pivot frame, a mounting seat, an adapter seat, and a driving arm fitting. The mounting seat is coupled to the pivot frame, and the adapter seat and the driving arm fitting are sequentially coupled to the mounting seat; thus, the driving arm fitting may be coupled to a driving arm. Additionally, the adapter seat may be coupled to different types of driving arm fittings and driving arms, so as to be installed on different vehicle models, thereby increasing practicality and convenience in use.

### BRIEF DESCRIPTION OF THE DRAWINGS

The features of the disclosure believed to be novel are set forth with particularity in the appended claims. The disclosure itself, however, may be best understood by reference to the following detailed description of the disclosure, which describes a number of exemplary embodiments of the disclosure, taken in conjunction with the accompanying drawings, in which:
FIG. 1 is a schematic view illustrating the use of the universal wiper mounting base assembly structure of the present disclosure.
FIG. 2 is an assembly schematic view illustrating the adapter seat coupled to the driving arm fitting of the present disclosure.
FIG. 3 is an assembly schematic view illustrating the driving arm fitting and the mounting seat of the present disclosure.
FIG. 4 is an assembly schematic view illustrating the mounting seat and the pivot frame of the present disclosure.
FIGS. 5 and 6 are cross-sectional views of the universal wiper mounting base assembly structure of the present disclosure.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

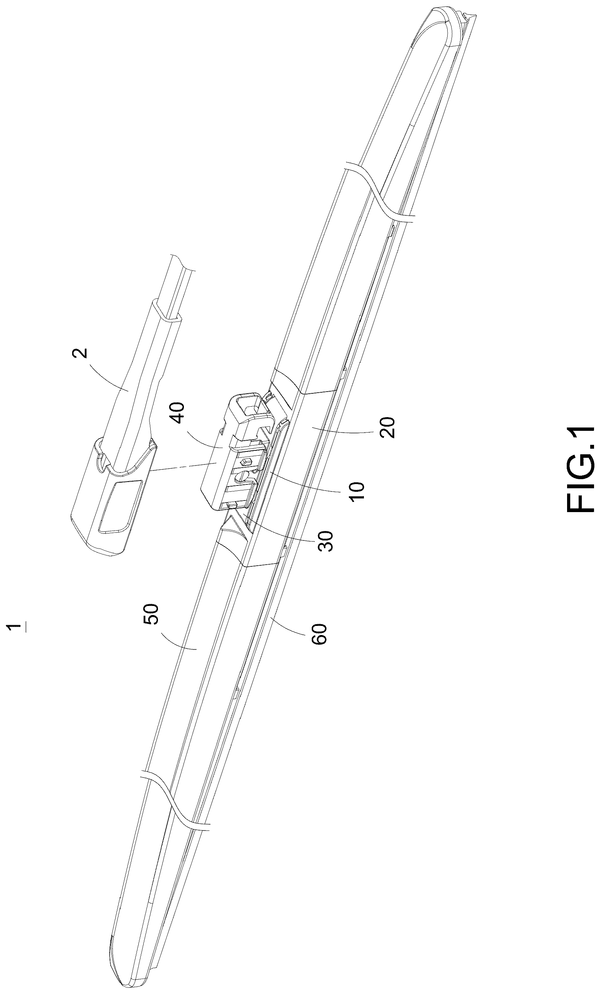

Referring to FIGS. 1 to 4, which depict a schematic view illustrating the use of the universal wiper mounting base assembly structure of the present disclosure; an assembly schematic view illustrating the adapter seat coupled to the driving arm fitting of the present disclosure; an assembly schematic view illustrating the driving arm fitting and the mounting seat of the present disclosure; and an assembly schematic view illustrating the mounting seat and the pivot frame of the present disclosure. This disclosure provides a universal wiper mounting base assembly structure 1, including a pivot frame 10, a mounting seat 20, an adapter seat 30, and a driving arm fitting 40. The mounting seat 20 is coupled to the pivot frame 10. The adapter seat 30 and the driving arm fitting 40 are then sequentially coupled to the mounting seat 20. Accordingly, the driving arm fitting 40 may be used to couple a driving arm 2. In some embodiments, the adapter seat 30 may be coupled with different models of the driving arm fitting 40 and the driving arm 2 to enable installation on different vehicle types. A more detailed description of the universal wiper mounting base assembly structure 1 follows.

Moreover, the universal wiper mounting base assembly structure 1 further includes a pair of shrouds 50 and a wiper strip assembly 60. The pair of shrouds 50 is coupled to the two sides of the mounting seat 20, and the wiper strip assembly 60 is coupled to the bottom side of the pivot frame 10.

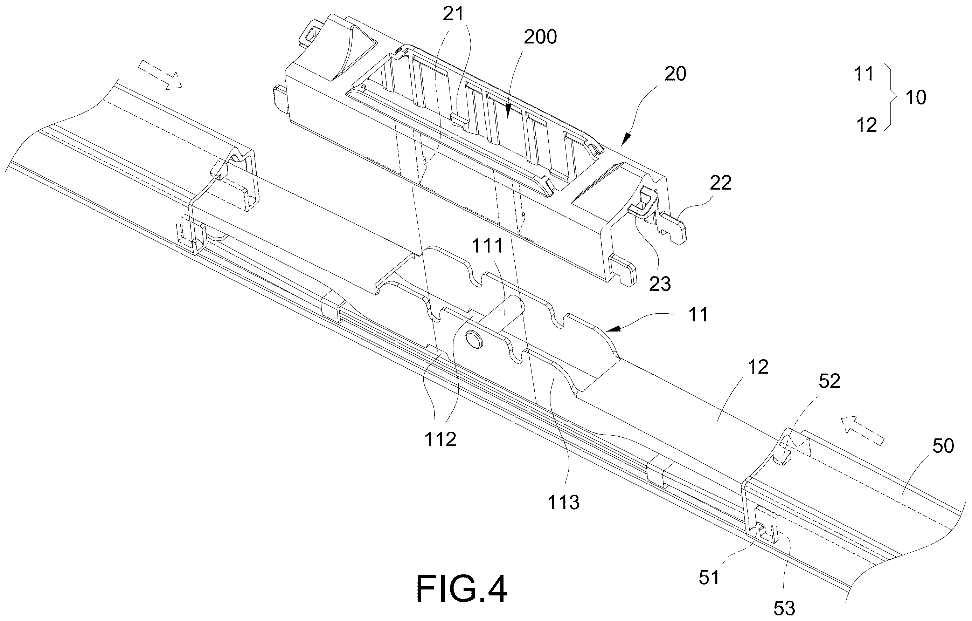

Referring to FIG. 4, the pivot frame 10 includes a pivot seat 11 and a pair of extension arms 12 connected to two the sides of the pivot seat 11. The pivot seat 11 has a pivot shaft 111 and a plurality of latch grooves 112. Additionally, the pivot seat 11 includes two supporting plates 113 spacedly arranged between the pair of extension arms 12, and the pivot shaft 111 extends across the two supporting plates 113.

The mounting seat 20 has an accommodation space 200 and a plurality of latch hooks 21. The mounting seat 20 is coupled to the pivot seat 11 through mutual engagement of the latch hooks 21 with the latch grooves 112 of the pivot frame 10. In the present embodiment, the latch hooks 21 are symmetrically disposed on opposite sides of the accommodation space 200.

It should be noted that each of the shrouds 50 includes a pair of engaging blocks 51 and a protrusion 52 located between the pair of engaging blocks 51. A pair of hooks 22 and a hook hole 23 are disposed on two sides of the mounting seat 20. Additionally, each of the shrouds 50 is coupled to one side of the mounting seat 20 through the engagement of the pair of engaging blocks 51 with the pair of hooks 22 and the protrusion 52 with the hook hole 23. Specifically, each of the shrouds 50 has a pair of flanges 53 disposed at an end facing the mounting seat 20. Each of the engaging blocks 51 is located between the inner wall surface of the shroud 50 and its corresponding flange 53.

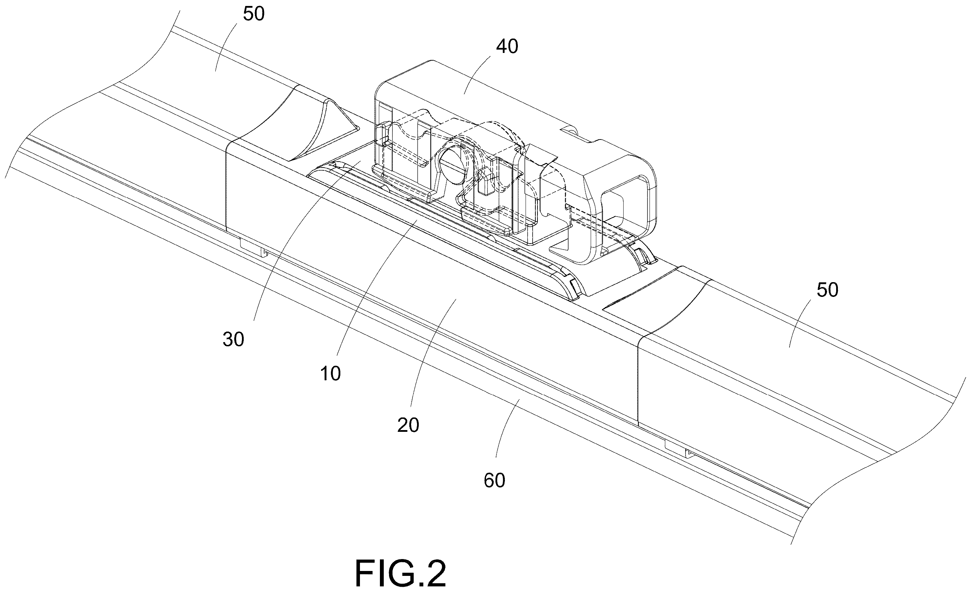

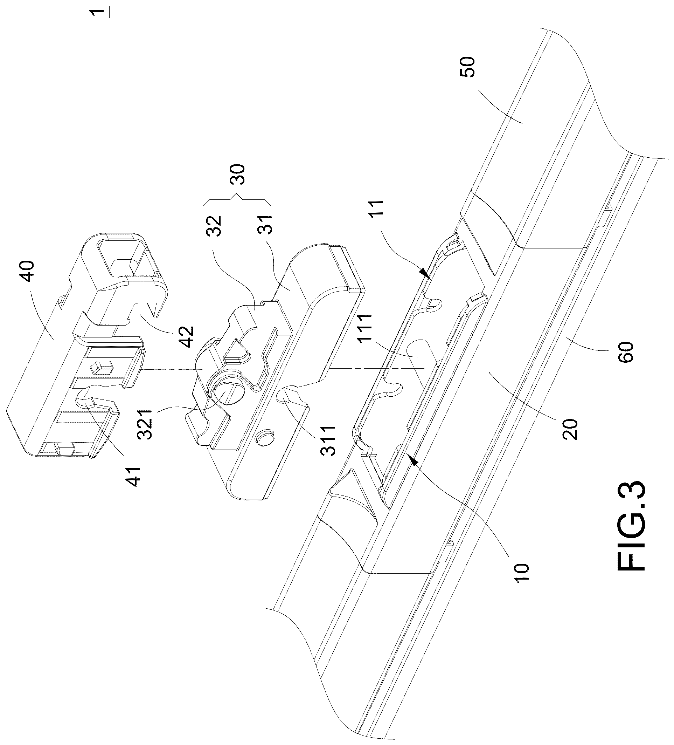

Referring to FIGS. 2 and 3, the adapter seat 30 includes a base 31 and a carrier 32 disposed on the base 31. A pivot hole 311 is defined in the base 31. A first coupling portion 321 is disposed on the carrier 32. The base 31 is coupled to the pivot seat 11 through the pivot shaft 111 being pivotally received in the pivot hole 311 and is positioned within the accommodation space 200. It is noted that the pivot hole 311 is located at the same longitudinal position relative to the first coupling portion 321.

Furthermore, the driving arm fitting 40 includes a second coupling portion 41 and a plurality of positioning portions 42 for connecting the driving arm 2. The driving arm fitting 40 is coupled to the carrier 32 of the adapter seat 30 through mutual engagement of the second coupling portion 41 with the first coupling portion 321. In this embodiment, the first coupling portion 321 is a shaft, and the second coupling portion 41 is an axial hole. Additionally, each of the positioning portions 42 is a slot.

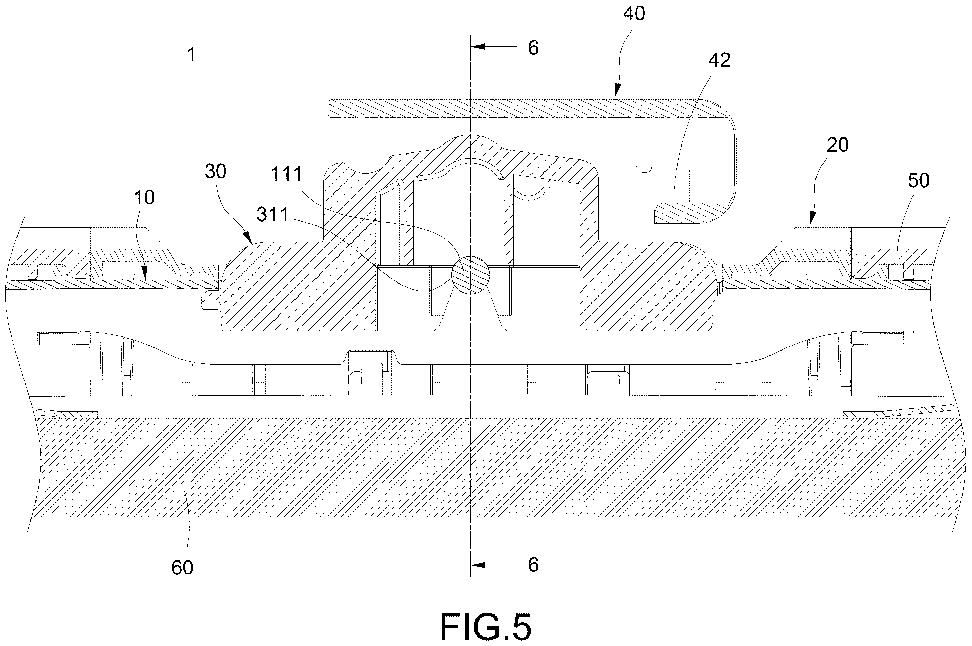

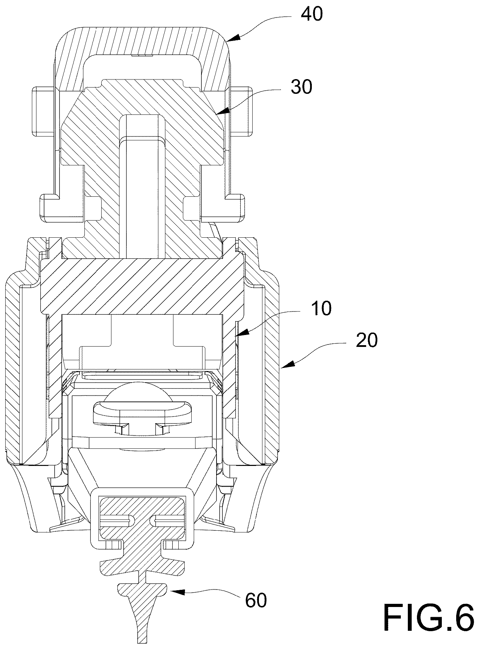

Referring further to FIGS. 5 and 6, which are sectional views of the universal wiper mounting base assembly structure of the present application, the pivot shaft 111 of the pivot frame 10 is received in the pivot hole 311 of the adapter seat 30. The driving arm fitting 40 is coupled to the adapter seat 30. The pair of shrouds 50 is coupled to the two sides of the mounting seat 20. Additionally, the wiper strip assembly 60 is coupled to the bottom side of the pivot frame 10, thereby completing the universal wiper mounting base assembly structure of the present application.

## Claims

1. A universal wiper mounting base assembly structure (1) configured to be coupled with a driving arm (2), the universal wiper mounting base assembly structure (1) comprising:
a pivot frame (10) comprising a pivot seat (11) and a pair of extension arms (12) connected to two sides of the pivot seat (11), the pivot seat (11) having a pivot shaft (111) and a plurality of latch grooves (112);
a mounting seat (20) having an accommodation space (200) and a plurality of latch hooks (21), the mounting seat (20) coupled to the pivot seat (11) through mutual engagement of the latch hooks (21) with the latch grooves (112);
an adapter seat (30) comprising a base (31) and a carrier (32) disposed on the base (31), a pivot hole (311) defined in the base (31), a first coupling portion (321) disposed on the carrier (32), the base (31) coupled to the pivot seat (11) through the pivot shaft (111) pivotally received in the pivot hole (311), and the base (31) positioned within the accommodation space (200); and
a driving arm fitting (40) comprising a second coupling portion (41) and a plurality of positioning portions (42) for connecting the driving arm (2), the driving arm fitting (40) coupled to the carrier (32) through mutual engagement of the second coupling portion (41) with the first coupling portion (321).

2. The universal wiper mounting base assembly structure (1) according to claim 1, further comprising a pair of shrouds (50) coupled to two sides of the mounting seat (20), each of the shrouds (50) comprising a pair of engaging blocks (51) and a protrusion (52) disposed between the engaging blocks (51), wherein the mounting seat (20) has a pair of hooks (22) and a hook hole (23) on two sides thereof, and each of the shrouds (50) is coupled to one side of the mounting seat (20) through engagement of the pair of engaging blocks (51) with the pair of hooks (22) and engagement of the protrusion (52) with the hook hole (23).

3. The universal wiper mounting base assembly structure according to claim 2, wherein each of the shrouds (50) has a pair of flanges (53) disposed at an end facing the mounting seat (20), and each of the engaging blocks (51) is located between an inner wall surface of the shroud (50) and each of the flanges (53).

4. The universal wiper mounting base assembly structure (1) according to claim 1, further comprising a wiper strip assembly (60) coupled to a bottom side of the pivot frame (10).

5. The universal wiper mounting base assembly structure according to claim 1, wherein the pivot seat (11) comprises two supporting plates (113) spacedly arranged between the pair of extension arms (12), and the pivot shaft (111) extends across the two supporting plates (113).

6. The universal wiper mounting base assembly structure according to claim 1, wherein the latch hooks (21) are symmetrically disposed on opposite sides of the accommodation space (200).

7. The universal wiper mounting base assembly structure according to claim 1, wherein the first coupling portion (321) is a shaft, and the second coupling portion (41) is an axial hole.

8. The universal wiper mounting base assembly structure according to claim 1, wherein the pivot hole (311) is located at the same longitudinal position relative to the first coupling portion (321).

9. The universal wiper mounting base assembly structure according to claim 1, wherein each positioning portion (42) of the driving arm fitting (40) is a slot.
